Europäisches Patentamt

European Patent Office

Office européen des brevets

(11) Publication number: **0 298 730**
**A1**

## (12) EUROPEAN PATENT APPLICATION

(21) Application number: 88306178.0

(22) Date of filing: 07.07.88

(51) Int. Cl.⁴ **B29C 55/00** , **C08J 5/18** ,
//B29K23:00,B29L7:00

---

(30) Priority: 08.07.87 GB 8716025

(43) Date of publication of application:
**11.01.89 Bulletin 89/02**

(84) Designated Contracting States:
**ES GR**

(71) Applicant: COURTAULDS FILMS &
PACKAGING (HOLDINGS) LTD.
**Bath Road**
**Bridgwater Somerset TA6 4PA(GB)**

(72) Inventor: **Clegg, Alan James**
**6 Landseer Close Worle**
**Weston-super-Mare Avon BS22 9NL(GB)**
Inventor: **Crighton, Allan John**
**9 New Road West Huntspill**
**Highbridge Somerset(GB)**

(74) Representative: **Claisse, John Anthony, Dr.**
**Courtaulds Films & Packaging (Holdings) Ltd**
**Bath Road**
**Bridgwater Somerset TA6 4PA(GB)**

---

(54) Oriented polypropylene films.

(57) This invention concerns oriented polypropylene films having increased rigidity, tensile strength and impact resistance, and decreased water vapour transmission compared with hitherto proposed films. This is achieved by the use of polypropylene having a melt flow index of from 1.5 to 18.0 and a polydispersity index of from 3.0 to 5.5. Large area stretch ratios can be achieved, for example in excess of 80:1.

EP 0 298 730 A1

## ORIENTED POLYPROPYLENE FILMS

This invention concerns oriented polypropylene films.

It is known to produce oriented polypropylene films. In order to provide the films with various properties, for example heat sealability, one or more layers can be applied to either or both sides of the films. Such layers can be formed by co-extrusion of the material for forming the layers with the polypropylene. The resultant films have found wide acceptance as packaging materials.

According to the present invention there is provided an oriented polypropylene film, the polypropylene used to prepare the film having a melt flow index of 1.5 to 18. 0 and a polydispersity index of from 3.0 to 5.5.

The polypropylene films of the present invention have particularly good physical properties compared with known oriented polypropylene films. Films of the present invention have shown increased rigidity, increased tensile strength, increased impact resistance and decreased water vapour transmission rates compared with conventional films produced from polypropylene other than as specified for films of the present invention.

The melt flow index of the polypropylene should be from 1.5 to 18.0 as measured by ASTM method D1238 at 230° C (condition L), and it is preferably from 2.5 to 6.0.

The polydispersity index of the polypropylene should be from 3.0 to 5.5 as measured by the method of G. R. Zeichner and P. D. Patel ("A comprehensive evaluation of polymer melt rheology", Proceedings of 2nd World Congress of Chem. Eng., Vol. 6, page 333, Montreal, 1981), preferably from 3.5 to 4.2. The polydispersity index of a polymer is a measure of the spread of molecular weight distribution in the polymer, and it is inversely proportional to the crossover modulus of the polymer under oscillatory shear.

Polypropylene having the desired rheological properties can be produced by modifying the molecular weight distribution of known grades of polypropylene. In particular, the molecular weight range of a given grade of polypropylene can be reduced by selectively reducing the molecular weight of the higher weight components. This can be effected, for example, by reaction with peroxides.

Polypropylene films of the present invention can be produced using conventional orientation techniques, and in general using sequential stretching in the machine and transverse directions. Particularly good physical properties can be imparted to films of the present invention using machine direction stretch ratios in excess of 5.5 : 1, preferably from 6.5 to 8.0 : 1, and subsequent transverse direction stretch ratios in excess of 10 : 1, preferably from 12 to 13.5 : 1. Film area increases of greater than 80 : 1, and preferably from 95 to 110 : 1, have given films with good rigidity, tensile strength and impact strength, and reduced water vapour transmission rates.

Film rigidity has been increased by at least 20% in the machine direction and by at least 10% in the transverse direction, machine direction tensile strength has been increased by at least 40%, and impact strength has been increased by at least 50%, all compared with conventional oriented polypropylene films made from polypropylene homopolymer having in particular a polydispersity index outside the range specified for the present invention. Water vapour transmission rates reduced by at least 15% have also been observed.

Films of the present invention can also include additives which modify their frictional and/or antistatic properties, for example silicones and/or amides and/or other additives known in the art.

Polypropylene films of the present invention can be provided with any of the coatings and/or layers known in the art for polypropylene films and for the purposes of providing a similar effect.

Sealability can he provided by a cold seal layer, for example of an elastomeric composition, or by a hot seal layer, for example a polymeric layer containing units derived from at least one of ethylene, propylene and butene. Heat sealability can also be provided by using layers of copolymers of vinylidene chloride, for example with vinyl chloride and/or methyl methacrylate. Polymeric layers containing units derived from vinylidene chloride and/or acrylics can also be used as primer layers, for example to aid printability.

Antiblock can be imparted by the inclusion of particulate materials in the coatings or layers, for example silica can be included.

While it is often preferred to produce heat seal and other layers on a polypropylene base layer by co-extrusion or extrusion coating, it is possible, and in some cases it is preferable, if not essential, to produce layers on the polypropylene using aqueous dispersions or solutions of the material for forming the desired layer.

Subsequent to orientation, the films of the present invention can, if desired, be subjected to further processing steps. For example, one or both sides of the film can be subjected to corona discharge in air or other gases or to flame treatment, both being used to enhance the wettability and/or the printability of the resultant film.

Polypropylene films of the present invention can be provided with metal layers, e.g. of aluminium, for example a metal layer can be deposited by a vapour technique or by lamination to a metal film using an adhesive layer. Such techniques are well known in the art for polypropylene films.

It is also possible to laminate polypropylene films of the present invention to other polymeric films to provide various effects. For example, it is possible to protect a layer of printed indicia by lamination with the indicia protected within the laminate.

Lamination using metal and/or other layers can also be used to modify the properties of the resultant composite film, for example reduce their permeability to oxygen and/or water vapour can be achieved, for example as is known in the art.

The following Examples are given by way of illustration only:-

## Example 1

A propylene homopolymer of melt index 4.0 and polydispersity index 4.4 was extruded through a flat die onto a water immersed chill roll to produce a flat sheet of 3.0mm thickness. The sheet is then re-heated to 120°C and stretched 7.5 : 1 in the machine direction (MD). The stretched sheet is then further heated to about 160°C and stretched 15 : 1 in the transverse direction (TD) using a stenter oven. The film was relaxed in the transverse direction, cooled, and wound up. The resultant film had the properties shown in Table 1 which also shows those for a conventional oriented polypropylene film produced from a polypropylene resin of melt index 3.0 and polydispersity index 5.9 stretched 5.0 : 1 and 9.0 : 1 in the machine and transverse directions respectively.

## Example 2

A film was produced using the method of example 1 but using a polypropylene homopolymer of melt index 5.0 and polydispersity index 3.6 and coextruding the homopolymer with a propylene-ethylene copolymer to form outer layer(s) on both sides constituting about 7% of the total film thickness. This film was stretched 7.7 : 1 in the machine direction and 12.5 : 1 in the transverse direction.

The properties of the film are shown in Table 1.

TABLE 1

| Property | Conventional Polypropylene film | Example 1 | Example 2 |
|---|---|---|---|
| Thickness (micron) | 30 | 30 | 30 |
| Rigidity (g/cm) MD/TD | 1.3/2.3 | 1.7/2.8 | 1.9/2.6 |
| Modulus (MPa) MD/TD | 1400/2500 | 2300/4050 | 2450/3900 |
| Tensile strength (MPa) MD/TD | 120/260 | 175/260 | 190/265 |
| Impact strength[2] (kg/cm) | 60 | 122 | 133 |
| WVTR[3] (g/m$^3$ 24 Hr.) | 4.3 | 3.5 | 3.5 |
| 1. Handle-o-meter method - British Standard 2782 method 332 | | | |

2. Frank method
3. Water vapour transmission rate 38°C 90% RH

## Claims

1. An oriented polypropylene film, the polypropylene used to prepare the film having a melt flow index of 1.5 to 18.0 and a polydispersity index of from 3.0 to 5.5.

2. A polypropylene film according to claim 1, wherein the polypropylene has a melt index of 2.5 to 6.0.

3. A polypropylene film according to either of the preceding claims, wherein the polypropylene has a polydispersity index of from 3.5 to 4.2.

4. A polypropylene film according to any of the preceding claims stretched in excess of 5.5 : 1 in the machine direction.

5. A polypropylene film according to any of the preceding claims stretched in excess of 10 : 1 in the transverse direction.

6. A polypropylene film according to any of the preceding claims, having a total area stretch ratio in excess of 80 : 1.

7. A polypropylene film according to claim 6, having a total area stretch ratio of from 95 to 110:1.

8. A polypropylene film according to any of the preceding claims, having at least one polymeric layer thereon.

9. A polymeric film according to claim 8, having a polymeric layer on each surface.

10. A polypropylene film according to any of the preceding claims, having a heat sealable layer thereon.

11. A polymeric film according to any of the preceding claims, having at least one metal layer.

12. A polypropylene film according to any of the preceding claims, laminated to a further film comprising a polymeric layer.

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-3 898 209 (WATSON et al.) * Column 2, line 54 - column 3, line 12; column 4, lines 5-8; figure * | 1-3 | B 29 C 55/00 C 08 J 5/18 // B 29 K 23:00 B 29 L 7:00 |
| X | GB-A-2 100 268 (KIMBERLEY-CLARK) * Claims 6,17 * | 1-3 | |
| X | JAPANESE PATENTS GAZETTE, Section Ch: Chemical, week 8726, class AE, 12th August 1987, page 7, no. 87-183256/26, Derwent Publications Ltd, London, GB; & JP-A-62 115 049 (SUMITOMO CHEM. IND. K.K.) 26-05-1987 * Abstract * | 1,2 | |
| A | JAPANESE PATENTS GAZETTE, Section Ch: Chemical, week 8537, class A, 23nd October 1985, page 19, no. 85-227701/37, Derwent Publications Ltd, London, GB; & JP-A-60 149 434 (MITSUI TOATSU CHEM. INC.) 06-08-1985 | 1,2 | |
| A | GB-A-1 201 060 (ESSO) * Page 4, line 106 - page 5, line 58 * & US-A-3 551 943 (STATON et al.) | 1-3 | TECHNICAL FIELDS SEARCHED (Int. Cl.4) B 29 C C 08 J C 08 L |
| A | CH-A- 371 587 (MONTECATINI et al.) * Page 2, lines 48-61; examples * | 1,4,5 | |
| A | EP-A-0 029 119 (HOECHST) * Page 6, lines 22-25 * | 1,4,5, 11 | |
| A | EP-A-0 211 433 (HERCULES) * Whole document * | 1,8-12 | |

The present search report has been drawn up for all claims

| Place of search | Date of completion of the search | Examiner |
|---|---|---|
| THE HAGUE | 07-09-1988 | ATTALLA G. |